# FASCICULE DE BREVET EUROPEEN

(11) **EP 1 442 205 B1**
(45) Date de publication et mention de la délivrance du brevet: **29.11.2006**
(21) Numéro de dépôt: 02788030.1
(22) Date de dépôt: 30.10.2002
(51) Int. Cl.: F02D 19/12

(54) **PROCEDE D'INJECTION DIRECTE D'ADDITIF POUR CARBURANT DE MOTEUR A COMBUSTION INTERNE**
VERFAHREN ZUR DIREKTEN EINSPRITZUNG EINES BRENNSTOFFADDITIVS IN EINER BRENNKRAFTMASCHINE
METHOD FOR DIRECT INJECTION OF ADDITIVE FOR INTERNAL COMBUSTION ENGINE FUEL

(30) Priorité: 30.10.2001 FR 0114028
(43) Date de publication de la demande: 04.08.2004
(73) Titulaire: Renault s.a.s., 92100 Boulogne Billancourt (FR)
(72) Inventeur: ARCHIMBAUD, Marie-Laure, F-75010 Paris (FR); BAUX, Antoine, F-75015 Paris (FR)
(74) Mandataire: Cémeli, Eric Philippe Laurent
(86) Numéro de dépôt international: PCT/FR2002/003732
(87) Numéro de publication internationale: WO 2003/038258

(56) Documents cités:
- EP-A- 0 488 831
- EP-A- 0 590 814
- EP-A- 1 031 707
- DE-U- 9 313 112
- DE-U- 20 102 002

## Description

### DOMAINE TECHNIQUE

Le domaine technique de la présente invention concerne celui de la dépollution des moteurs à combustion interne associés à un filtre à particules.

Plus particulièrement, le domaine technique de la présente invention concerne celui de la dépollution des moteurs Diesel.

En outre, cette invention se rapporte à un procédé d'injection d'additif s'effectuant de façon directe dans un réservoir de carburant du moteur à combustion interne, ce moteur étant associé à une ligne d'échappement munie d'un filtre à particules, le procédé reposant sur le suivi d'un niveau de carburant dans le réservoir, et sur l'actionnement de moyens d'injection d'additif dans le réservoir de carburant.

### ETAT DE LA TECHNIQUE ANTERIEURE

Dans ce type d'installations, le filtre à particules permet de collecter les particules à l'échappement du moteur. Périodiquement, ce filtre doit être régénéré en brûlant les suies accumulées dans celui-ci. La température de combustion des suies accumulées dans le filtre à particules, de l'ordre de 550°C, peut être difficile à obtenir avec certains moteurs Diesel.

D'autre part, le filtre à particules doit être lavé après un certain nombre de régénérations, pour enlever les résidus de combustion accumulés à chaque régénération.

Pour faire face à ce problème, l'état de la technique propose d'abaisser la température de combustion des suies, et ce jusqu'à une valeur qui soit facilement atteinte dans les gaz d'échappement d'un moteur Diesel.

Dans ce domaine, plusieurs réalisations ont en effet déjà été proposées.

On connaît les procédés d'injection d'additif pour carburant effectués par pulvérisation de cet additif dans les gaz d'échappement en amont du filtre à particules. Ce type de procédé rencontre cependant un inconvénient majeur qui est celui de la non-suffisance de l'intégration de l'additif aux particules de suies, réduisant ainsi fortement l'efficacité du procédé.

On connaît également les procédés consistant à introduire l'additif dans l'air frais admis dans le moteur. L'inconvénient d'une telle mise en oeuvre est relatif à la difficulté de dosage qui reste trop contraignante pour pouvoir être acceptable.

En outre, l'état de la technique nous renseigne sur les procédés d'injection d'additif utilisant la ligne de retour des injecteurs, sous réserve que le débit de retour soit suffisamment important pour entraîner l'additif. Ce type de procédé, bien qu'assurant le brassage du carburant et de l'additif, ne garantie pas que la condition liée au retour soit satisfaite en permanence.

L'expérience dans le domaine a donc démontré qu'il était souhaitable d'effectuer un ajout d'additif, directement dans le carburant, ceci permettant d'obtenir de meilleures conditions pour effectuer le dosage de l'additif, ainsi que de disposer d'une efficacité accrue pour la régénération des particules.

Dans ce type de procédé, on connaît l'injection directe effectuée dans le réservoir de carburant, et ce lorsque l'on détecte le remplissage du réservoir de carburant.

Selon une solution proposée, la détection s'effectue lors de l'ouverture de la trappe de carburant. Cependant, ce mode de détection reposant sur un capteur spécifique est subordonné au bon fonctionnement de ce capteur. De plus, lors d'un remplacement de la trappe d'origine, il est alors nécessaire que la nouvelle trappe dispose d'un tel capteur, ce qui rend la solution très contraignante.

Il est à noter que la régénération du filtre à particules requiert un dosage très précis de l'additif dans le carburant. En effet, étant donné que l'additif sert à abaisser le seuil de température requis pour brûler les suies accumulées dans le filtre à particules, un défaut d'additif dans le carburant ne permettra pas au moteur Diesel de porter les gaz d'échappement à la température de régénération. A l'inverse, un excès d'additif augmentera la masse de résidus de combustion accumulée à chaque régénération dans le filtre, et entraînera une augmentation du nombre de lavage à effectuer.

### EXPOSÉ DE L'INVENTION

Le but de la présente invention est de remédier aux inconvénients cités ci-dessus, en proposant un procédé d'injection directe d'additif pour carburant de moteur à combustion interne, ce procédé disposant d'une stratégie de reconnaissance d'une augmentation du niveau de carburant, et ne faisant pas appel à un capteur du type capteur d'ouverture de trappe.

Pour ce faire, l'invention a pour objet un procédé d'injection directe d'additif pour carburant de moteur à combustion interne, le moteur à combustion interne étant associé à une ligne d'échappement munie d'un filtre à particules, ledit procédé reposant sur le suivi d'un niveau de carburant à l'intérieur d'un réservoir ainsi que sur l'actionnement de moyens d'injection d'additif. Selon l'invention, les moyens d'injection d'additif sont actionnés après une détection d'un remplissage de carburant par comparaison entre un ancien et un nouveau niveau de carburant, la détection d'un remplissage étant réalisée lors d'un ralenti conservé pendant une période déterminée et l'ancien niveau de carburant prenant alors une valeur résultant d'une mesure unique effectuée.

Avantageusement, ce procédé permet de s'exonérer de la présence d'un capteur du type capteur d'ouverture de trappe de carburant, tout en assurant une injection d'additif précise et efficace.

De plus, l'invention utilise une mesure unique effectuée dans le réservoir pour donner une valeur à l'ancien niveau de carburant, et cela uniquement lorsque le ralenti détecté du véhicule se prolonge durant une période déterminée. Dans un tel cas, la valeur mesurée donnée à l'ancien niveau est destinée à être comparée à une valeur d'un nouveau niveau.

De préférence, la détection d'un remplissage par comparaison est également réalisée lors d'un arrêt du moteur conservé pendant une période déterminée, l'ancien niveau de carburant prenant alors une valeur résultant d'une mesure unique effectuée.

De façon préférentielle, la mesure effectuée pour donner une valeur à l'ancien niveau est prise à la fin de la période déterminée, cette dernière correspondant à une période durant laquelle un remplissage significatif du réservoir en carburant est impossible.

Ainsi, en optimisant la valeur de ces paramètres, on dispose d'un procédé simple de détection de remplissage significatif de carburant, permettant de détecter les remplissages effectués à la fois moteur arrêté et moteur tournant.

D'autres avantages et caractéristiques de l'invention apparaîtront dans la description non limitative ci-dessous.

### BRÈVE DESCRIPTION DES DESSINS

Le description sera faite en regard des dessins annexés parmi lesquels :
- la figure 1 représente un schéma d'une installation pouvant être commandée par un procédé selon l'invention,
- la figure 2 est un graphe représentant le niveau de carburant à l'intérieur du réservoir en fonction du temps, lorsque le véhicule subit un remplissage du réservoir moteur tournant, le temps étant exprimé en secondes et le niveau de carburant en litres,
- la figure 3 est un graphe représentant le niveau de carburant à l'intérieur du réservoir en fonction du temps, lorsque le véhicule subit un remplissage du réservoir contact coupé, le temps étant exprimé en secondes et le niveau de carburant en litres,
- la figure 4 représente un diagramme fonctionnel schématisant une mise en oeuvre d'un procédé selon un mode de réalisation préféré de l'invention.

### EXPOSÉ DÉTAILLÉ D'UN MODE DE RÉALISATION PRÉFÉRÉ

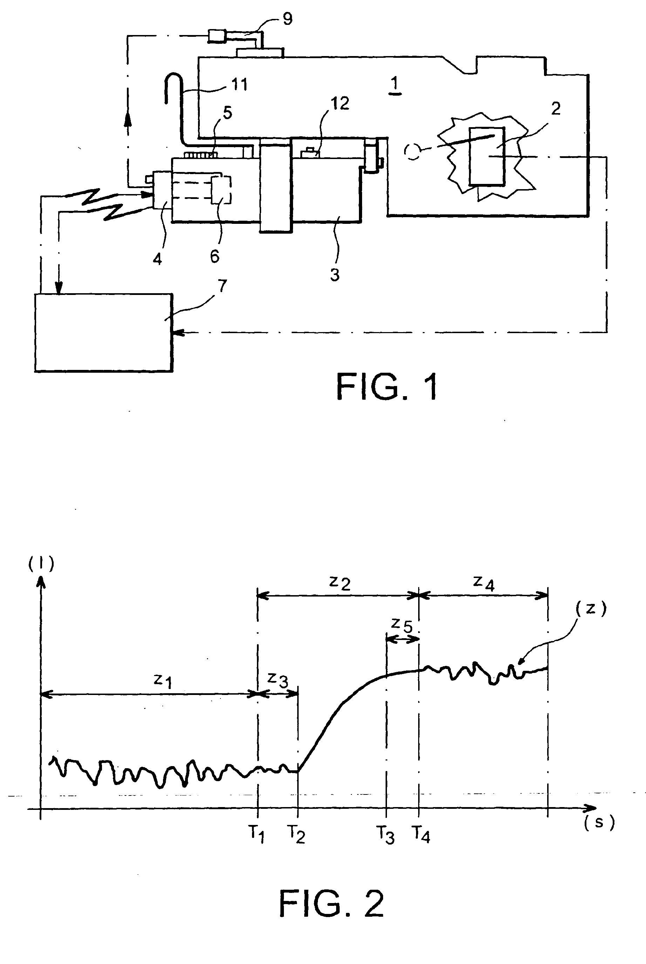

En référence à la figure 1, on voit une représentation schématique d'une installation pouvant être associée au procédé selon l'invention.

Cette installation comprend un réservoir 1 de carburant d'un véhicule, muni d'une jauge de niveau de carburant 2. Un réservoir 3 d'additif, disposé sous le réservoir 1 de carburant, contient- une micro-pompe doseuse 4, un bouchon 5, et de préférence une thermistance 6 chargée de détecter un niveau bas d'additif. L'installation comprend également un calculateur de contrôle moteur 7, contrôlant en outre l'injection d'additif, et étant relié électriquement à la thermistance 6 dont il reçoit une information relative au niveau d'additif.

Notons qu'une stratégie implémentée dans le calculateur de contrôle moteur 7 permet de connaître avec précision le niveau d'additif restant dans le réservoir 1, notamment à partir de la connaissance du nombre de cycles d'injection effectués par la micro-pompe doseuse 4, et également par la connaissance de la cylindrée unitaire de cette micro-pompe doseuse 4.

Le calculateur 7 est apte à récupérer d'autres informations utiles comme celle du niveau de carburant provenant de la jauge de niveau 2.

L'additif est injecté du réservoir 3 d'additif vers le réservoir 1 de carburant, notamment par l'intermédiaire d'une platine d'injection 9.

Le système comporte également des moyens de mise à l'air libre 11 du réservoir 3 d'additif, ainsi qu'un clapet de pression et de dépression 12.

Selon un mode préféré de réalisation de l'invention, on dispose d'un procédé d'injection directe d'additif pour carburant de moteur à combustion interne, le moteur à combustion interne étant associé à une ligne d'échappement munie d'un filtre à particules.

Le procédé tient compte du suivi de niveau de carburant à l'intérieur du réservoir 1 et actionne en conséquence des moyens d'injection d'additif telle que la micro-pompe doseuse 4. L'actionnement des moyens d'injection d'additif est effectué lors d'une détection d'un remplissage de carburant, cette détection s'effectuant par comparaison d'un ancien niveau de carburant et d'un nouveau niveau de carburant. Cependant, la détection s'amorce lorsque le véhicule observe un ralenti pendant une période déterminée.

Par ralenti, on entend par exemple un état dans lequel la vitesse du véhicule passe en dessous d'un certain seuil et lorsque le rapport de la boîte de vitesse est nul. En d'autres termes, on cherche à détecter des périodes durant lesquelles un utilisateur de ce véhicule serait en mesure d'effectuer un remplissage de carburant tout en laissant son moteur tourner, ce qui peut notamment être le cas dans les pays froids.

Selon l'invention, une fois que cette période déterminée est dépassée, l'ancien niveau de carburant prend alors une valeur résultant d'une mesure unique effectuée à l'intérieur du réservoir 1. Ainsi, la valeur donnée à l'ancien niveau est de préférence la valeur mesurée à la fin de cette période déterminée, à l'intérieur du réservoir 1, par l'intermédiaire de la jauge de niveau 2.

Ce procédé s'applique également lorsque l'on détecte un arrêt du moteur du véhicule pendant une période déterminée. Dans ce cas, ce sont les remplissages de carburant lorsque le moteur est arrêté que l'on cherche à déceler.

Lorsque la période déterminée de ralenti est dépassée ou que l'arrêt du moteur a été plus long que cette période déterminée, on prend respectivement, lors de la sortie de l'état de ralenti du véhicule ou lors de la remise du contact du moteur, une nouvelle mesure du niveau de carburant, la valeur mesurée devenant alors la valeur du nouveau niveau de carburant.

La valeur mesurée peut par exemple être celle prise cinq secondes avant la sortie de l'état de ralenti, ou encore une mesure prise après la mise du contact du moteur et avant le déplacement du véhicule. Dans ce dernier cas, ces précautions sont prises pour ne pas subir dans la mesure du niveau de carburant, les oscillations de niveaux dues au déplacement du véhicule.

Pour illustrer ces cas de figure et tout d'abord en référence à la figure 2, on voit une courbe (z) représentant le niveau de carburant à l'intérieur du réservoir 1 du véhicule en fonction du temps. Durant la première période z₁, le véhicule roule et on peut noter les oscillations peu significatives du niveau de carburant dans le réservoir 1, ces oscillations provenant du déplacement du véhicule. A la fin de la période z₁, à l'instant T₁, le véhicule passe dans une phase de ralenti z₂, phase durant laquelle un remplissage du réservoir 1 a lieu. A la fin d'une période déterminée z₃ dans laquelle le véhicule bascule dès le début de la phase de ralenti z₂, on relève à l'instant T₂ la mesure du niveau de carburant, cette valeur mesurée étant alors affectée à la valeur de l'ancien niveau.

L'instant T₄ est l'instant correspondant à la jonction entre la fin de la phase de ralenti z₂ et une nouvelle période de roulage z₄ du véhicule. A l'instant T₄, le véhicule détecte une nouvelle phase de roulage et enregistre donc la valeur du nouveau niveau de carburant, cette valeur pouvant être mesurée à l'instant T₄, ou encore à un instant T₃, correspondant par exemple à une durée z₅ de cinq secondes avant le basculement du véhicule de la phase de ralenti z₂ dans la nouvelle période de roulage z₄.

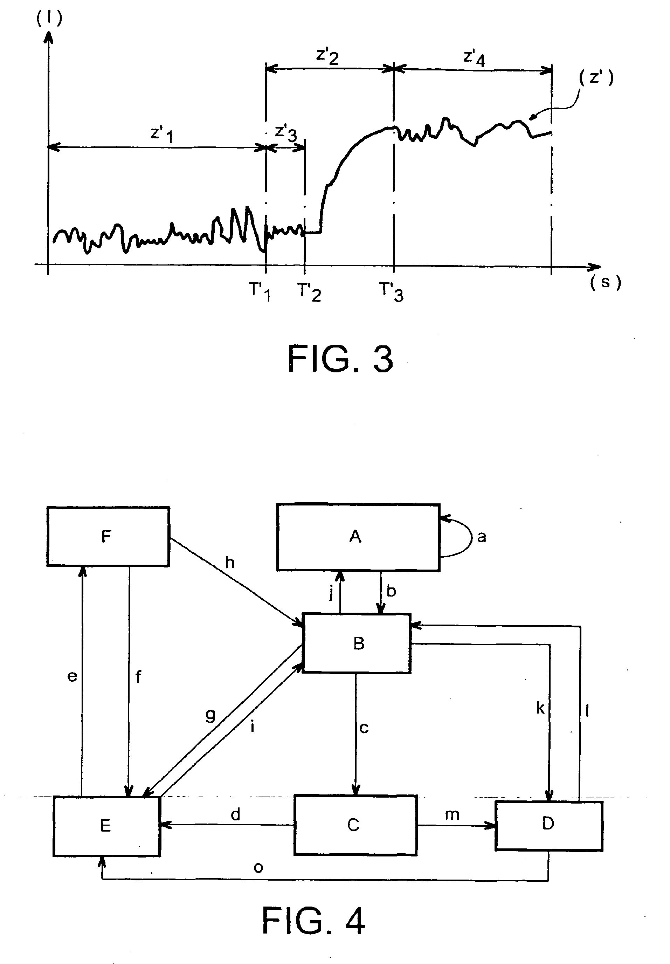

De même, en référence à la figure 3, on voit une courbe (z') représentant le niveau de carburant dans le réservoir 1 en fonction du temps. Durant la première période z'₁, le moteur du véhicule est en contact et on peut noter les oscillations peu significatives du niveau de carburant dans le réservoir 1, ces oscillations provenant du déplacement du véhicule. A la fin de la période z'₁, à l'instant T'₁, le véhicule détecte le passage du moteur dans une phase de coupure de contact z'₂, phase durant laquelle un remplissage du réservoir 1 a lieu. A la fin d'une période déterminée z'₃ dans laquelle le véhicule bascule dès le début de la phase de coupure de contact z'₂, on relève à l'instant T'₂ la mesure du niveau de carburant, cette valeur mesurée étant alors affectée à la valeur de l'ancien niveau.

L'instant T'₃ est l'instant correspondant à la jonction entre la fin de la phase de coupure de contact z'₂ et une nouvelle période z'₄ durant laquelle le moteur du véhicule est en contact. A l'instant T'₃, le véhicule mesure et enregistre alors la valeur du nouveau niveau de carburant.

Dans l'un quelconque des cas décrits ci-dessus, lorsque le ralenti ou la coupure du contact est prolongé, on effectue une comparaison entre l'ancien et le nouveau niveau de carburant. Notons qu'après la coupure du contact du moteur, la valeur de l'ancien niveau de carburant prise à la fin de la période déterminée est sauvegardée en mémoire morte afin d'être réutilisée pour la comparaison lors de la remise du contact du moteur.

Lorsque la comparaison entre ces deux valeurs révèle un remplissage significatif de carburant, les moyens d'injection d'additif sont alors actionnés pour envoyer une quantité d'additif adaptée à la mesure du remplissage de carburant détecté.

De préférence, on considère qu'il y a un remplissage significatif de carburant lorsque la différence entre les deux niveaux successifs de carburant excède cinq litres. Il est cependant à noter que le remplissage significatif pourrait être fixé à une quantité de carburant plus faible, de l'ordre de trois litres, mais que la valeur préférée de cinq litres s'adapte tout à fait aux conditions rencontrées par un automobiliste quelconque.

De plus, la période déterminée mentionnée ci-dessus, à la fois pour l'état de ralenti et pour l'état d'arrêt du moteur, peut être de l'ordre de douze secondes, cette valeur correspondant au temps moyen que prend un utilisateur pour descendre de son véhicule afin d'aller remplir son réservoir 1 de carburant. Cette valeur arbitraire est cependant adaptable, mais doit en tout état de cause ne pas être trop faible pour éviter d'effectuer une prise de mesure dans un réservoir non encore stabilisé, qui indiquerait par conséquent une valeur erronée. A l'inverse, cette valeur ne doit pas non plus être trop importante pour éviter que la mesure du niveau de carburant soit prise alors que le remplissage du carburant a déjà commencé. Cela entraînerait en effet une mauvaise détection de la quantité de carburant ajoutée dans le réservoir 1, la comparaison entre l'ancien niveau et le nouveau niveau de carburant se basant sur une valeur de l'ancien niveau défaillante.

En revanche, la détection du remplissage de carburant n'est pas effectuée lorsque le ralenti ou l'arrêt du moteur n'excède pas une durée supérieure ou égale à la période déterminée. On considère en effet qu'il n'est pas nécessaire de solliciter le calculateur 7 lorsque les conditions rendent quasiment impossible le remplissage du réservoir 1 de carburant par l'utilisateur, même lorsque l'on détecte un état de ralenti ou un arrêt du moteur.

En présence d'un ralenti non conservé pendant la période déterminée, on peut ne pas modifier la valeur existante de l'ancien niveau de carburant. Cette valeur est alors conservée jusqu'à ce que l'un des ralentis suivants soit prolongé pendant une durée au moins égale à la période déterminée. Par ailleurs, il est également possible de mesurer la valeur du niveau de carburant à la fin du ralenti non conservé pendant une période déterminée, et d'affecter cette valeur mesurée à la valeur de l'ancien niveau.

Dans le cas de l'arrêt du moteur non suffisamment prolongé, on considère qu'il n'y a pas eu de remplissage possible du réservoir 1 en carburant, et on interdit donc toute injection d'additif en affectant la valeur du nouveau niveau de carburant à la valeur de l'ancien niveau de carburant, de manière à obtenir un écart de niveaux nul.

En référence à la figure 4, on a représenté un diagramme fonctionnel dans lequel se situent les principales actions mises en oeuvre par un procédé selon un mode de réalisation préféré de l'invention, ainsi que les principaux états dans lesquels peut se retrouver le véhicule.

On note tout d'abord qu'un état traduisant l'existence d'un ou plusieurs problèmes dans le procédé d'injection n'est pas représenté. Cet état correspond aux périodes durant lesquelles les moyens utilisés pour mettre en oeuvre le procédé ne permettent plus l'injection de l'additif ou la détection du remplissage. Cet état peut à titre d'exemple survenir lorsque la jauge de niveau 2 est bloquée ou lorsque la micro-pompe 4 est en court-circuit.

Parmi les états principaux, on note les suivants :
- A : on se retrouve dans cet état lors de la mise du contact du moteur, ou après la coupure du contact lorsque la coupure s'est prolongée pendant un durée supérieure à la période déterminée.
- B : on se retrouve dans cet état lorsque le véhicule a démarré, ou après un ralenti prolongé, ou après une coupure du contact.
- C : on se retrouve dans cet état après une mise en contact du moteur, ou après un ralenti prolongé lorsque le véhicule commence à se déplacer.
- D : état correspondant aux phases d'injection d'additif. On se retrouve dans cet état lorsque la quantité de carburant rajoutée et détectée est supérieure à une valeur donnée, par exemple cinq litres, ou lorsque l'injection d'additif précédente n'a pas été terminée.
- E : état correspondant aux phases de roulage du véhicule. On se retrouve dans cet état lorsque l'état F correspondant aux phases de ralenti du véhicule est conservé pendant une durée inférieure à la période déterminée, ou lorsque la quantité de carburant rajoutée et détectée est inférieure à une quantité significative, de l'ordre de cinq litres, ou encore lorsque l'injection d'additif qui était en cours est terminée.
- F : état correspondant aux phases de ralenti du véhicule. On se retrouve dans cet état lorsque la vitesse du véhicule passe en dessous d'un seuil et lorsque le rapport de la boîte de vitesse est nul.

Toujours en référence à la figure 4, on peut détailler les différentes actions effectuées entre les états mentionnés ci-dessus.

Parmi ces actions, on note les suivantes :
- a : à la mise du contact du moteur, on initialise la valeur du nouveau niveau de carburant à l'aide de la mesure du niveau de carburant effectuée à l'intérieur du réservoir par l'intermédiaire de la jauge de niveau 2. Il est également procédé au chargement de l'information relative à la durée de la coupure du moteur, pour déterminer si cette coupure a été plus ou moins longue que la période déterminée. De plus, on charge l'information sur la valeur de l'ancien niveau.
- b : si les opérations d'injection d'additif antérieures sont terminées, alors on calcule l'écart entre les valeurs de l'ancien et du nouveau niveau de carburant.
- m : si l'écart calculé entre l'ancien et le nouveau niveau de carburant est supérieur à une quantité représentant un remplissage significatif de carburant, on procède à l'injection d'additif selon des proportions calculées.
- d : si l'écart calculé entre l'ancien et le nouveau niveau de carburant est inférieur à une quantité représentant un remplissage significatif de carburant, on ne procède à aucune injection d'additif et on passe dans l'état E correspondant aux phases de roulage du véhicule.
- e,f : ces actions caractérisent le passage d'un état de roulage à un état de ralenti du véhicule et vis versa, le passage étant effectué selon des données relevées concernant la vitesse du véhicule ainsi que le rapport de la boîte de vitesse.
- g : lorsque le contact du moteur est coupé, on vient indiquer à l'état B le début de la période où le moteur est arrêté.
- i : lorsque le moteur est remis en contact et que la durée de l'arrêt du moteur a été inférieure à la durée de la période déterminée, on repasse dans l'état E correspondant aux phases de roulage du véhicule, sans effectuer d'autres actions comme celle d'effectuer une comparaison entre les différents niveaux de carburant.
- h : si l'on se trouve dans l'état F correspondant aux phases de ralenti du véhicule pendant une durée supérieure à la période déterminée, on affecte dans l'état B une valeur à l'ancien niveau de carburant, cette valeur étant mesurée de préférence à la fin de cette période déterminée par l'intermédiaire de la jauge de niveau 2. Ce temps est nécessaire pour que les oscillations du carburant dans le réservoir 1 soient amorties. De plus, si le contact du moteur est coupé alors que le véhicule se trouve dans l'état F, on indique à l'état B le début de la période de coupure du contact.
- j : lorsque la période d'arrêt du moteur excède la durée de la période déterminée, on affecte une nouvelle valeur à l'ancien niveau de carburant, cette valeur étant mesurée de préférence à la fin de cette période déterminée, par l'intermédiaire de la jauge de niveau 2. On indique également à l'état A que la période déterminée est achevée.
- c : lorsqu'il n'y pas eu de coupure de contact et qu'un ralenti se prolonge pendant une durée au moins supérieure à la période déterminée, on affecte alors à la valeur du nouveau niveau, la valeur mesurée du niveau de carburant juste avant la sortie de l'état F correspondant à un ralenti du véhicule. De plus, si le véhicule sort d'une coupure du contact du moteur s'étant prolongée pendant une durée inférieure à la période déterminée, la valeur de l'ancien niveau prend la valeur mesurée pour établir le nouveau niveau de carburant, sans qu'il ne soit procédé au calcul de l'écart entre ces deux valeurs.
- k : on procède à l'injection d'additif lorsque le véhicule démarre et que l'injection d'additif antérieure n'était pas terminée. L'injection d'additif s'effectue lorsque le véhicule roule, afin d'obtenir un mélange optimal de l'additif dans le réservoir 1 de carburant.
- l : on informe l'état B que la coupure du contact du moteur a stoppé l'injection d'additif non encore achevée.
- o : cette action symbolise que l'injection d'additif est terminée et que le véhicule retourne dans un état E correspondant à une phase de roulage du véhicule.

Bien entendu, diverses modifications peuvent être apportées par l'homme de l'art au procédé qui vient d'être décrit, uniquement à titre d'exemple non limitatif.

## Revendications

1. Procédé d'injection directe d'additif pour carburant de moteur à combustion interne, le moteur à combustion interne étant associé à une ligne d'échappement munie d'un filtre à particules, ledit procédé reposant sur le suivi d'un niveau de carburant à l'intérieur d'un réservoir (1) ainsi que sur l'actionnement de moyens d'injection d'additif, **caractérisé en ce que** les moyens d'injection d'additif sont actionnés après une détection d'un remplissage de carburant par comparaison entre un ancien et un nouveau niveau de carburant, ladite détection étant réalisée lors d'un ralenti conservé pendant une période déterminée, ledit ancien niveau de carburant prenant alors une valeur résultant d'une mesure unique effectuée.

2. Procédé d'injection directe d'additif selon la revendication 1, **caractérisé en ce que** ladite détection est de plus réalisée lors d'une coupure du contact du moteur conservée pendant une période déterminée, ledit ancien niveau de carburant prenant alors une valeur résultant d'une mesure unique effectuée.

3. Procédé d'injection directe d'additif selon la revendication 1 ou la revendication 2, **caractérisé en ce que** la mesure effectuée est prise à la fin de la période déterminée.

4. Procédé d'injection directe d'additif selon l'une quelconque des revendications précédentes, **caractérisé en ce que** la période déterminée correspond à une période durant laquelle un remplissage significatif du réservoir (1) en carburant est impossible.

5. Procédé d'injection directe d'additif selon l'une quelconque des revendications 2 à 4, **caractérisé en ce qu'**après une coupure du contact du moteur s'étant prolongée pendant une durée supérieure à la période déterminée, une valeur mesurée du niveau de carburant lors de la remise en contact du moteur est affectée comme valeur du nouveau niveau.

6. Procédé d'injection directe d'additif selon l'une quelconque des revendications précédentes, **caractérisé en ce qu'**à la fin d'un ralenti s'étant prolongée pendant un durée supérieure à la période déterminée, une valeur du niveau de carburant est mesurée et affectée comme valeur du nouveau niveau.

7. Procédé d'injection directe d'additif selon l'une quelconque des revendications précédentes, **caractérisé en ce que** lorsqu'un écart entre le nouveau et l'ancien niveau de carburant est significatif, on procède à une injection d'additif dans le réservoir (1).

8. Procédé d'injection directe d'additif selon l'une quelconque des revendications précédentes, **caractérisé en ce que** l'ancien niveau de carburant est sauvegardé en mémoire morte après la coupure du contact du moteur.

9. Procédé d'injection directe d'additif selon l'une quelconque des revendications précédentes, **caractérisé en ce qu'**après une coupure du contact du moteur, lorsque le moteur est remis en contact avant que la période déterminée ne se soit entièrement écoulée, une valeur mesurée du niveau de carburant lors de la remise en contact du moteur est directement affectée comme valeur de l'ancien niveau.

10. Procédé d'injection directe d'additif selon l'une quelconque des revendications précédentes, **caractérisé en ce qu'**à la fin d'un ralenti s'étant prolongée pendant un durée inférieure à la période déterminée, une valeur du niveau de carburant est mesurée et affectée comme valeur de l'ancien niveau.

11. Procédé d'injection directe d'additif selon l'une quelconque des revendications précédentes, **caractérisé en ce que** la mesure unique effectuée est réalisée à l'intérieur du réservoir (1) par l'intermédiaire d'une jauge de niveau (2).

12. Procédé d'injection directe d'additif selon l'une quelconque des revendications précédentes, **caractérisé en ce qu'**une valeur d'une quantité d'additif restant à injecter dans le carburant, en cas de coupure du contact du moteur avant la fin de l'injection, est sauvegardée en mémoire morte.

## Claims

1. Method for direct injection of additive for internal combustion engine fuel, the internal combustion engine being associated with an exhaust line provided with a particulate filter, the said method being based on monitoring a fuel level inside a tank (1) and on actuating additive injection means, **characterized in that** the additive injection means are actuated after detection of fuel filling by comparing a former and a new fuel level, the said detection being carried out during an idling state maintained for a defined period, the said former fuel level then assuming a value resulting from a single measurement carried out.

2. Method for direct injection of additive according to Claim 1, **characterized in that** the said detection is moreover carried out during an engine ignition switch-off maintained for a defined period, the said former fuel level then assuming a value resulting from a single measurement carried out.

3. Method for direct injection of additive according to Claim 1 or Claim 2, **characterized in that** the measurement carried out is taken at the end of the defined period.

4. Method for direct injection of additive according to any one of the preceding claims, **characterized in that** the defined period corresponds to a period during which significant fuel filling of the tank (1) is impossible.

5. Method for direct injection of additive according to any one of Claims 2 to 4, **characterized in that**, after engine ignition switch-off has been prolonged for a period greater than the defined period, a measured value of the fuel level when switching back on the engine ignition is assigned as the value of the new level.

6. Method for direct injection of additive according to any one of the preceding claims, **characterized in that**, at the end of an idle state having been prolonged for a period greater than the defined period, a value of the fuel level is measured and assigned as the value of the new level.

7. Method for direct injection of additive according to any one of the preceding claims, **characterized in that**, when there is a significant deviation between the new and the former fuel level, additive is injected into the tank (1).

8. Method for direct injection of additive according to any one of the preceding claims, **characterized in that** the former fuel level is safeguarded in a read-only memory after the engine ignition has been switched off.

9. Method for direct injection of additive according to any one of the preceding claims, **characterized in that**, after engine ignition switch-off, when the engine is switched back on again before the defined period has entirely elapsed, a measured value of the fuel level when switching back on the engine ignition is directly assigned as the value of the former level.

10. Method for direct injection of additive according to any one of the preceding claims, **characterized in that**, at the end of an idling state having been prolonged for a period shorter than the defined period, a value of the fuel level is measured and assigned as the value of the former level.

11. Method for direct injection of additive according to any one of the preceding claims, **characterized in that** the single measurement carried out is performed inside the tank (1) by means of a level gauge (2).

12. Method for direct injection of additive according to any one of the preceding claims, **characterized in that** a value of an additive quantity remaining to be injected into the fuel, in the event of the engine ignition being switched off before the end of the injection, is safeguarded in a read-only memory.

## Patentansprüche

1. Verfahren zur direkten Einspritzung eines Brennstoffadditivs in eine Brennkraftmaschine, wobei die Brennkraftmaschine mit einer Auspuffleitung, die mit einem Partikelfilter versehen ist, verbunden ist, wobei das Verfahren auf der Überwachung eines Brennstoffstandes im Inneren eines Behälters (1) sowie auf der Betätigung von Einspritzmitteln für das Additiv beruht, **dadurch gekennzeichnet, dass** die Einspritzmittel für das Additiv nach Erfassung einer Brennstoffbefüllung durch vergleich zwischen einem alten und einem neuen Brennstoffstand betätigt werden, wobei die Erfassung bei einer während eines bestimmten Zeitraums aufrecht erhaltenen Verlangsamung erfolgt, wobei der alte Brennstoffstand nun einen Wert annimmt, der sich aus einer einzigen durchgeführten Messung ergibt.

2. Verfahren zur direkten Einspritzung eines Additivs nach Anspruch 1, **dadurch gekennzeichnet, dass** die Erfassung ferner während einer Unterbrechung des Kontakts des Motors erfolgt, die während eines bestimmten Zeitraums aufrecht erhalten wird, wobei der alte Brennstoffstand nun einen Wert annimmt, der sich aus einer einzigen durchgeführten Messung ergibt.

3. Verfahren zur direkten Einspritzung eines Additivs nach Anspruch 1 oder Anspruch 2, **dadurch gekennzeichnet, dass** die durchgeführte Messung am Ende des bestimmten Zeitraums genommen wird.

4. Verfahren zur direkten Einspritzung eines Additivs nach einem der vorhergehenden Ansprüche, **dadurch gekennzeichnet, dass** der bestimmte Zeitraum einem Zeitraum entspricht, während dessen eine signifikante Befüllung des Behälters (1) mit Brennstoff unmöglich ist.

5. Verfahren zur direkten Einspritzung eines Additivs nach einem der Ansprüche 2 bis 4, **dadurch gekennzeichnet, dass**, nachdem eine Unterbrechung des Kontakts des Motors während einer längeren Dauer als der bestimmte Zeitraum verlängert wurde, ein Messwert des Brennstoffstandes bei der Wiederherstellung des Motorkontakts als Wert des neuen Standes zugewiesen wird.

6. Verfahren zur direkten Einspritzung eines Additivs nach einem der vorhergehenden Ansprüche, **dadurch gekennzeichnet, dass** am Ende einer Verlangsamung, die sich während einer längeren Dauer als der bestimmte Zeitraum fortgesetzt hat, ein Wert des Brennstoffstandes gemessen und als Wert des neuen Standes zugewiesen wird.

7. Verfahren zur direkten Einspritzung eines Additivs nach einem der vorhergehenden Ansprüche, **dadurch gekennzeichnet, dass**, wenn eine Abweichung zwischen dem neuen und dem alten Brennstoffstand signifikant ist, eine Additiveinspritzung in den Behälter (1) vorgenommen wird.

8. Verfahren zur direkten Einspritzung eines Additivs nach einem der vorhergehenden Ansprüche, **dadurch gekennzeichnet, dass** der alte Brennstoffstand nach Unterbrechung des Motorkontakts im Festspeicher gespeichert wird.

9. Verfahren zur direkten Einspritzung eines Additivs nach einem der vorhergehenden Ansprüche, **dadurch gekennzeichnet, dass** nach einer Unterbrechung des Motorkontakts, wenn der Motorkontakt wieder hergestellt wird, bevor der bestimmte Zeitraum zur Gänze abgelaufen ist, ein Messwert des Brennstoffstandes bei der Wiederherstellung des Motorkontakts direkt als Wert des alten Standes zugewiesen wird.

10. Verfahren zur direkten Einspritzung eines Additivs nach einem der vorhergehenden Ansprüche, **dadurch gekennzeichnet, dass** am Ende einer Verlangsamung, die während einer geringeren Dauer als der bestimmte Zeitraum beibehalten wurde, ein Wert des Brennstoffstandes gemessen und als Wert des alten Standes zugewiesen wird.

11. Verfahren zur direkten Einspritzung eines Additivs nach einem der vorhergehenden Ansprüche, **dadurch gekennzeichnet, dass** die einzige durchgeführte Messung im Inneren des Behälters (1) mit Hilfe eines Füllstandsmessers (2) erfolgt.

12. Verfahren zur direkten Einspritzung eines Additivs nach einem der vorhergehenden Ansprüche, **dadurch gekennzeichnet, dass** ein Wert einer Additivmenge, die in den Brennstoff einzuspritzen bleibt, im Falle einer Unterbrechung des Motorkontakts vor Ende des Einspritzens im Festspeicher gespeichert wird.
